# FASCICULE DE BREVET EUROPEEN

(11) **EP 2 004 489 B1**
(45) Date de publication et mention de la délivrance du brevet: **24.11.2010**
(21) Numéro de dépôt: 07726831.6
(22) Date de dépôt: 13.03.2007
(51) Int. Cl.: B64D 41/00, B64D 25/00

(54) **DISPOSITIF ET PROCEDE D'ALIMENTATION DE SECOURS ELECTRIQUE À BORD D'UN AERONEF**
VORRICHTUNG UND VERFAHREN ZUR NOTSTROMVERSORGUNG AN BORD EINES FLUGZEUGS
DEVICE AND METHOD FOR STANDBY POWER SUPPLY ON BOARD AN AIRCRAFT

(30) Priorité: 11.04.2006 FR 0651322
(43) Date de publication de la demande: 24.12.2008
(73) Titulaire: AIRBUS OPERATIONS, 31060 Toulouse (FR)
(72) Inventeur: LANGLOIS, Olivier, F-31770 Colomiers (FR); FOCH, Etienne, F-31000 Toulouse (FR)
(74) Mandataire: Ilgart, Jean-Christophe
(86) Numéro de dépôt international: PCT/EP2007/052325
(87) Numéro de publication internationale: WO 2007/115882

(56) Documents cités:
- EP-A2- 0 271 744
- DE-A1- 3 220 782
- US-A- 5 899 411
- JEAN-PHILIPPE POIRRIER: PENTADYNE NEWS AND EVENTS, [Online] 16 février 2006 (2006-02-16), XP002412024 Chatsworth, CA, US Extrait de l'Internet: URL:http://www.pentadyne.com/News2006Feb16 .htm> [extrait le 2006-12-18]

## Description

### DOMAINE TECHNIQUE

L'invention concerne un dispositif et un procédé d'alimentation de secours électrique à bord d'un aéronef, par exemple « tout électrique ».

### ÉTAT DE LA TECHNIQUE ANTÉRIEURE

Dans la suite de la description on considérera, à titre d'exemple, un aéronef du type avion.

Une source de secours électrique couramment employée sur un avion « plus électrique » (ou « more electric aircraft ») est une turbine éolienne (« Ram Air Turbine » ou RAT en anglais) entraînant un générateur électrique par l'intermédiaire d'un multiplicateur de vitesse.

Dans des situations d'urgence à bord d'un avion, on peut utiliser une telle turbine éolienne pour générer une puissance électrique suffisante pour permettre à cet avion de voler suffisamment longtemps et puis d'atterrir.

Une turbine éolienne comprend une hélice qui est actionnée par l'air à haute vitesse circulant contre l'avion. L'hélice, qui tourne ainsi, entraîne un générateur électrique qui fournit la puissance de secours nécessaire pour alimenter la partie « essentielle » du réseau électrique pour permettre aux systèmes critiques de l'avion, par exemple les commandes de vol et les circuits avioniques clés, de continuer à fonctionner. En vol normal, l'ensemble est replié et emmagasiné dans le fuselage ou dans une aile de l'avion.

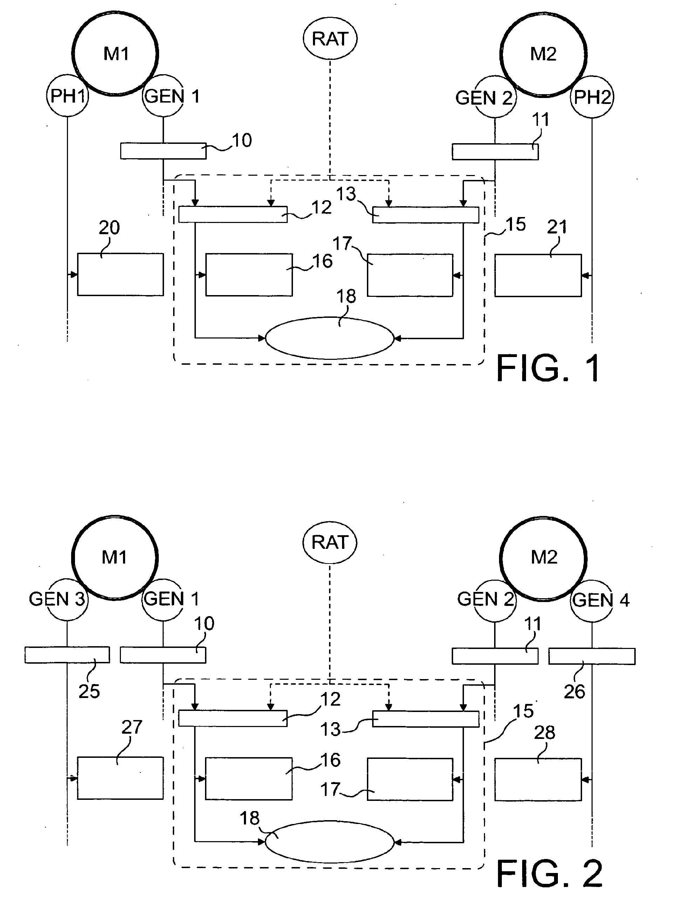

Sur un avion dit « plus électrique » les commandes de vol permettant de manoeuvrer l'avion sont déplacées par des actionneurs hydrauliques et électriques. Un exemple d'architecture des réseaux hydraulique et électrique correspondants est illustrée sur la figure 1, dans un cas de fonctionnement normal, la turbine éolienne n'étant pas en service.

Sur cette figure, un premier moteur M1 de l'avion entraîne mécaniquement une première génératrice électrique GEN1 et une pompe hydraulique PH1, et un second moteur M2 de l'avion entraîne mécaniquement une seconde génératrice électrique GEN2 et une seconde pompe hydraulique PH2.

Chaque génératrice électrique GEN1 ou GEN2 est reliée à une barre bus de distribution électrique triphasée respectivement 10 et 11, chacune de celle-ci étant reliée à une barre bus de distribution électrique triphasée « essentielle » 12 et 13. D'autre part, chaque pompe hydraulique PH1 ou PH2 permet d'alimenter des actionneurs hydrauliques 20 ou 21.

La partie « essentielle » 15 du réseau électrique comprend, en plus de ces barres bus 12 et 13, des actionneurs électriques 16 et 17, par exemple les actionneurs électriques de commande de vol, et d'autres charges essentielles 18.

Une turbine éolienne RAT peut être reliée à ces barres bus de distribution triphasée essentielles 12 et 13.

En cas de panne, ou perte, totale des moteurs M1 et M2, seuls les actionneurs électriques 16 et 17, ainsi que les autres charges essentielles 18 sont utilisés. En effet, la source de secours, qui est ici la turbine éolienne RAT, est électrique. En effet, en fonctionnement secours, le générateur électrique de la turbine éolienne RAT permet d'alimenter la partie « essentielle » 15 du réseau électrique, par exemple en courant alternatif triphasé 115/200 Volts AC.

Après l'avion « plus électrique », l'avion « tout électrique » est envisagé. Dans un tel avion les commandes de vol sont activées par des actionneurs uniquement électriques. Un exemple d'architecture correspondante est illustré sur la figure 2 dans un cas de fonctionnement normal, la turbine éolienne n'étant pas en service. Les éléments de cette figure 2, qui étaient déjà représentés sur la figure 1, gardent des références identiques.

Sur cette figure deux nouvelles génératrices électriques GEN3 et GEN4 sont reliées respectivement à des barres bus de distribution électrique triphasée 25 et 26, auxquelles sont connectés des actionneurs électriques 27 et 28.

La génération électrique de secours peut être réalisée par exemple en 115/200 Volts AC ou en 230/400 Volts AC. La partie « essentielle » 15 du réseau électrique est conçue pour ces mêmes tensions afin d'alimenter les équipements consommateurs « essentiels ».

Lors de la perte totale des moteurs se pose un problème technique lié à la période transitoire intervenant entre cette perte totale et la mise en service effective de la source de secours.

Sur un avion « plus électrique », possédant une architecture mixte, telle que celle illustrée sur la figure 1, avec des actionneurs électriques et hydrauliques, la production d'énergie durant cette période transitoire est naturellement assurée par les pompes hydrauliques du fait de l'inertie des moteurs.
Par contre la génération d'électricité est très rapidement stoppée après la perte des moteurs du fait des contraintes en fréquence électrique qui empêchent l'utilisation des génératrices électriques à faible vitesse de rotation.

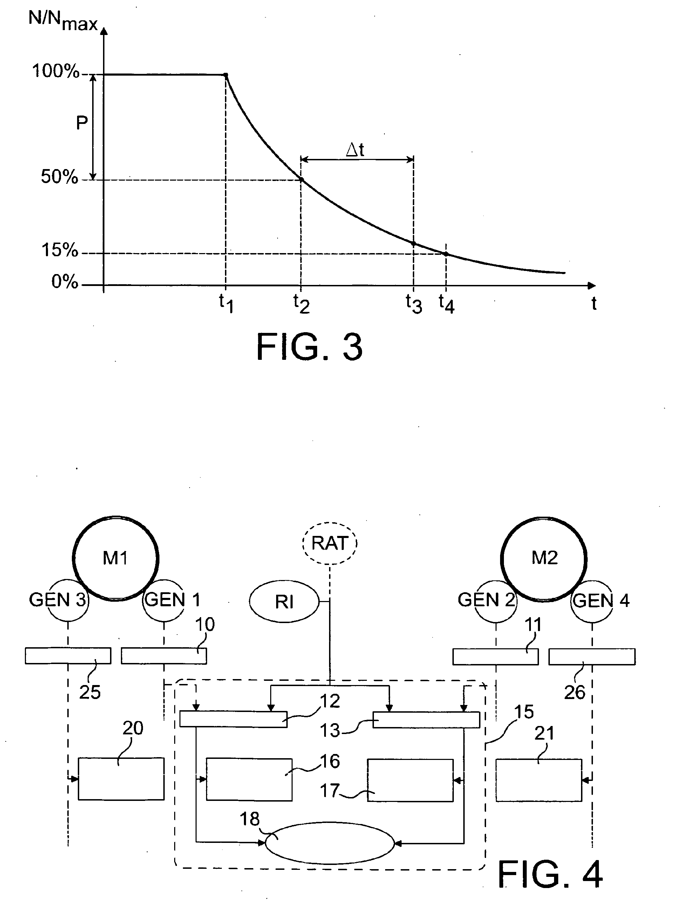

La figure 3 illustre ainsi les conséquences de la perte des moteurs sur des génératrices électriques GEN1 et GEN2 et des pompes hydrauliques PH1 et PH3 normales. Elle illustre, en effet, une courbe N/Nmax en fonction du temps, N étant la vitesse de rotation des moteurs, avec :
- P : plage de fonctionnement normal des moteurs,
- t1 : perte des moteurs avec une vitesse N égale à la vitesse maximale Nmax,
- t2 : perte des moteurs avec une vitesse N = 50% de Nmax, et perte de la génération électrique (génératrices GEN1 et GEN2),
- Δt : période transitoire (t2→t3),
- t4 : perte de la génération hydraulique (pompes hydrauliques PH1 et PH2).

Ainsi si la vitesse initiale des moteurs est de 50% de la vitesse maximale, la génération électrique (GEN1, GEN2) est perdue instantanément après la perte des moteurs (Ml et M2). Par contre la génération hydraulique (PH1, PH2) est assurée pendant quelques secondes (jusqu'au temps t4).

Une puissance et une énergie hydraulique suffisante peut donc être fournie pendant la mise en service de la source de secours (turbine éolienne RAT), ce qui permet de garantir la manoeuvrabilité de l'avion.

Sur un avion « tout électrique », l'absence d'énergie hydraulique ne permet donc plus d'assurer la couverture de la période transitoire Δt juste après la perte des moteurs, ni donc d'assurer la manoeuvrabilité de l'avion.

Il faut, de plus, remarquer qu'une seconde période transitoire est observée lors de l'atterrissage de l'avion. En effet, une turbine éolienne RAT est inefficace à basse vitesse de l'avion, après l'atterrissage. Or, le freinage des roues de l'avion requière une puissance et une énergie conséquente.

Sur un avion « plus électrique » possédant un réseau hydraulique, le freinage en mode secours est réalisé grâce à des accumulateurs hydrauliques, qui permettent d'alimenter les freins en libérant leur fluide sous une pression donnée. Par contre sur un avion « tout électrique », l'énergie nécessaire au freinage doit donc être fournie par une source électrique différente de la turbine éolienne.

L'invention a pour objet de proposer un dispositif et un procédé d'alimentation en puissance de secours permettant d'assurer la couverture de ces périodes transitoires.

Le brevet US 5,899,411 concerne un avion et plus particulièrement un système électrique qui utilise un générateur piloté par air pour fournir un démarrage électrique en vol des moteurs de propulsion, et une puissance de secours pour des systèmes de commande de vol critiques de l'avion pendant les essais de redémarrage des moteurs de propulsion pendant que l'avion est en vol.

L'article « Pentadyne news and events » de Jean-Philippe Poirrier (16 février 2006, XP002412024) envisage l'utilisation d'une roue à inertie dans un système électrique d'avion.

### EXPOSÉ DE L'INVENTION

L'invention concerne un dispositif d'alimentation de secours électrique à bord d'un aéronef, apte à alimenter la partie « essentielle » du réseau électrique de l'aéronef

selon la revendication 1, et un procédé selon la revendication 9.

Dans un mode avantageux de réalisation, le dispositif de l'invention comprend en outre une seconde machine synchrone à excitation séparée associée à une turbine éolienne.

Avantageusement la première machine synchrone est reliée :
- au dispositif auxiliaire, qui est lui-même relié à une barre bus « essentielle » au travers d'un premier contacteur triphasé,
- à cette barre bus à travers un second contacteur triphasé,
- à la seconde machine synchrone, à travers ce second contacteur triphasé et un troisième contacteur triphasé.

Avantageusement le dispositif auxiliaire comprend deux convertisseurs statiques. Le premier convertisseur est un redresseur triphasé permettant d'obtenir une tension continue. Le second convertisseur est un onduleur triphasé, qui permet l'autopilotage de la première machine synchrone.

L'invention concerne également un procédé d'alimentation de secours électrique à bord d'un aéronef, caractérisé en ce que l'on utilise une première machine synchrone à excitation séparée associée à une roue à inertie pour alimenter la partie « essentielle » du réseau électrique de l'aéronef lors d'une panne totale en génération électrique, et en ce qu'on met en rotation et on maintient en rotation la roue à inertie à l'aide d'un dispositif auxiliaire.

Avantageusement on utilise une seconde machine à excitation séparée associée à une turbine éolienne. Avantageusement lorsqu'une panne totale de la génération électrique intervient, la roue à inertie est instantanément couplée à la partie essentielle du réseau électrique, et dans lequel, après les quelques secondes nécessaires au déploiement et à la mise en rotation de la turbine éolienne, la roue à inertie est découplée du réseau. On recharge la roue à inertie en utilisant la partie « essentielle » du réseau électrique, via le dispositif auxiliaire.

Avantageusement lors de l'atterrissage de l'aéronef, après le décrochage de la turbine éolienne, la roue à inertie est couplée au réseau afin de fournir la puissance nécessaire au freinage de l'avion.

L'invention concerne, également, un aéronef comportant un dispositif tel que décrit ci-dessus.

Avantageusement l'aéronef est un avion « tout électrique ».

Le dispositif de l'invention présente de nombreux avantages :
- Il permet d'assurer la couverture des périodes transitoires : la mise en place d'un dispositif de stockage de type roue à inertie permet d'assurer la disponibilité du réseau électrique pendant les périodes transitoires d'inactivité de la source de secours électrique, par exemple de la turbine éolienne. Cette fonction est particulièrement utile dans les instants qui suivent la perte totale des moteurs, et lors de l'atterrissage de l'avion. Un tel avantage s'applique à tout avion possédant une source de secours électrique.
- Il peut être couplé directement au réseau alternatif triphasé de l'avion : la roue à inertie associée à une machine électrique triphasée permet un couplage direct au réseau triphasé de l'avion, sans l'usage de convertisseurs statiques. Cela est particulièrement intéressant dans la mesure où une expérience significative est acquise concernant le courant alternatif en aéronautique. L'absence de convertisseur statique permet d'améliorer la robustesse, en n'utilisant que des systèmes simples. Un tel avantage s'applique à un avion possédant au moins une partie du réseau de secours électrique en courant alternatif.

### BRÈVE DESCRIPTION DES DESSINS

La figure 1 illustre l'architecture simplifiée d'un réseau électrique d'avion « plus électrique » avec des actionneurs électriques et hydrauliques.
La figure 2 illustre l'architecture simplifiée d'un réseau d'avion « tout électrique », sans énergie hydraulique.
La figure 3 illustre une courbe N/Nmax en fonction du temps t, N étant la vitesse de rotation des moteurs, en cas de pertes des moteurs pour une architecture du type illustrée sur la figure 1.
La figure 4 illustre le dispositif d'alimentation de secours électrique de l'invention.
Les figures 5, 6 et 7 illustrent un exemple de réalisation du dispositif d'alimentation de secours électrique de l'invention, ainsi que le fonctionnement de celui-ci.

### EXPOSÉ DÉTAILLÉ DE MODES DE RÉALISATION PARTICULIERS

Comme illustré sur la figure 4, le dispositif d'alimentation de secours électrique de l'invention comprend un dispositif de stockage, par exemple une roue à inertie RI, associée éventuellement à une turbine éolienne RAT, les autres éléments de cette figure, déjà illustrés sur la figure 2, gardant les mêmes références.

La figure 4 illustre une architecture simplifiée d'un réseau électrique d'avion « tout électrique », c'est-à-dire sans énergie hydraulique en fonctionnement secours pendant les périodes transitoires où la turbine éolienne RAT n'est pas en service. La roue d'inertie RI (ou volant d'inertie, ou accumulateur cinétique, ou « Flywheel ») alimente la partie « essentielle » 15 du réseau électrique.

En effet, cette roue à inertie RI qui est accouplée à une machine électrique tournante, est réversible en puissance : elle permet le transfert d'énergie mécanique en énergie électrique, et vice-versa. Elle permet donc de stocker de l'énergie électrique sous forme mécanique en dehors des périodes transitoires, et de libérer ensuite l'énergie stockée mécaniquement vers le réseau électrique pendant les périodes transitoires.

L'usage d'une telle machine électrique offre la possibilité de réaliser le couplage de la roue à inertie directement sur le réseau alternatif triphasé de l'avion, par exemple 115/200 Volts AC ou 230/400 Volts AC, ce qui n'est pas le cas des nombreux autres systèmes de stockage électrochimiques existants, tels que les batteries d'accumulateurs et les supercondensateurs, qui sont utilisés exclusivement en courant continu. Un tel couplage évite la mise en place d'un convertisseur statique réalisé à partir d'une électronique de puissance. Il en résulte un gain de masse, de coût, et surtout de fiabilité.

Avantageusement cette machine électrique peut être une machine synchrone à excitation séparée, qui permet de maîtriser les tensions du réseau pendant les périodes transitoires, par action sur son excitation. Dans une telle machine on associe une machine principale et une machine auxiliaire, comme cela est souvent réalisé pour des générateurs électriques en aéronautique, l'excitation de la machine principale étant réalisée indirectement par l'excitation de la machine auxiliaire.

Toutefois une telle machine synchrone à excitation séparée ne peut pas être couplée en permanence sur le réseau électrique, car elle perturberait fortement les tensions. En effet, la moindre variation de fréquence, même dans le cas d'un réseau à fréquence fixe 400 Hz, forcerait une variation de vitesse de rotation de la roue à inertie. Sa forte inertie, s'opposant à la variation de vitesse imposée, impliquerait alors une forte variation de couple mécanique, et ainsi de fortes pointes de puissance pertubatrices sur le réseau électrique.

Cette machine synchrone à excitation séparée n'est donc couplée au réseau électrique qu'au moment des périodes transitoires, que le réseau soit alimenté par les générateurs électriques, en fonctionnement normal, ou la turbine éolienne, en fonctionnement secours.

Un dispositif auxiliaire permet de mettre en rotation la roue d'inertie et puis de la maintenir en rotation.

La mise en rotation de la roue à inertie, qui permet de stocker l'énergie cinétique dans celle-ci, est effectuée lors du démarrage de l'avion. Elle peut être obtenue par un autopilotage de la machine synchrone avec un convertisseur statique auxiliaire de faible puissance, ou par une seconde machine de faible puissance.

Le maintien en rotation de la roue à inertie, durant le fonctionnement de l'avion, lui permet de pouvoir intervenir à tout instant, l'énergie nécessaire à son maintien en rotation, qui est essentiellement destinée à compenser les pertes par frottements mécaniques, étant faible.

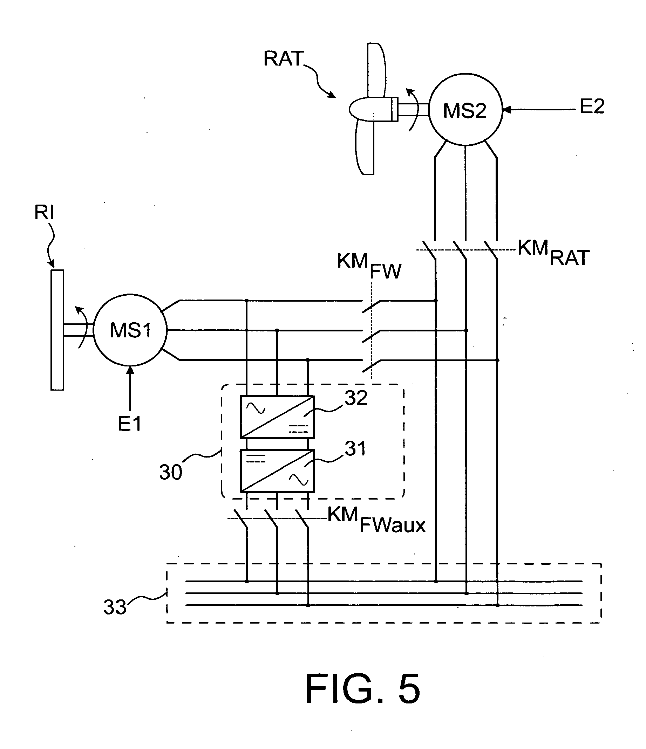

La figure 5 illustre un exemple de réalisation du dispositif de l'invention qui comprend un dispositif auxiliaire 30 associé à une roue à inertie RI accouplée à une première machine synchrone MS1 à excitation (E1) séparée, et une turbine éolienne RAT accouplée à une seconde machine synchrone à excitation (E2) séparée.

La première machine synchrone MS1 est reliée :
- au dispositif auxiliaire 30, qui est lui-même relié à la barre bus « essentielle » 33 au travers d'un premier contacteur triphasé KM_{FWaux},
- à cette barre bus 33 à travers un second contacteur triphasé KM_{FW},
- à la seconde machine synchrone MS2, à travers ce second contacteur triphasé KM_{FW}, et un troisième contacteur triphasé KM_{RAT}.

Le dispositif auxiliaire 30 comprend deux convertisseurs statiques 31, 32. Le premier convertisseur 31 est un redresseur triphasé permettant d'obtenir une tension continue (DC). Cette tension est ensuite « ondulée » à l'aide du second convertiseur 32, qui est un onduleur triphasé, qui permet l'autopilotage de la première machine synchrone MS1, afin de mettre progressivement en rotation cette première machine synchrone MS1 et la roue à inertie RI.

Le dispositif auxiliaire 30 est utilisé en permanence tant que la barre bus AC « essentielle » 33 est alimentée par les générateurs principaux (GEN1-GEN4) ou par la turbine éolienne RAT, l'interrupteur KM_{RAT} étant alors fermé dans ce dernier cas. Ce dispositif 30 maintient la vitesse de rotation de la roue à inertie RI à sa valeur nominale. Il prélève donc de la puissance sur le réseau électrique pour maintenir son état de charge. Le contacteur KM_{FW} est alors ouvert et le contacteur KM_{FWaux} fermé.

Lorsque la roue à inertie RI est couplée à la barre bus 33 dans le but de l'alimenter en électricité, les ordres de commande des contacteurs s'inversent : le contacteur *KM_{FW}* est fermé, et le contacteur *KM_{FWaux}* est ouvert. La puissance transite donc de la roue à inertie RI vers cette barre bus AC « essentielle » 33. La roue à inertie RI se décharge.

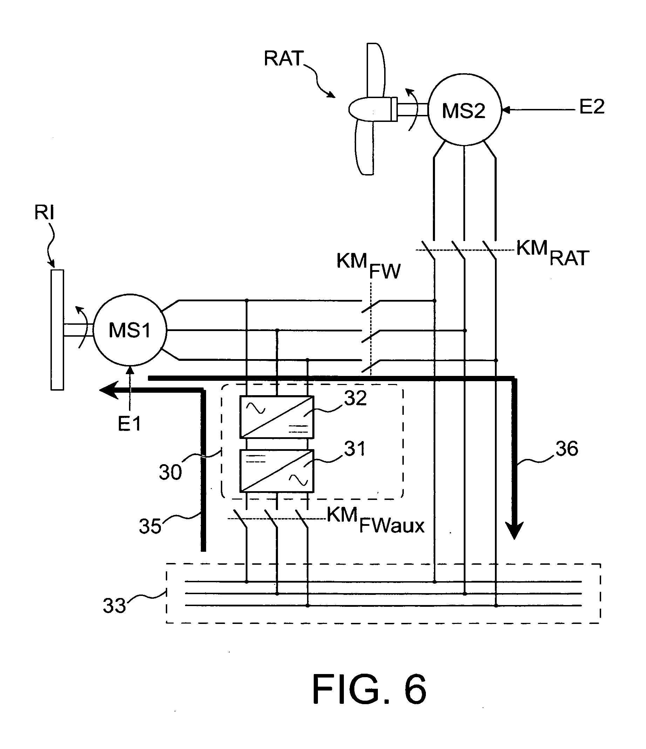

Ainsi, sur la figure 6, la flèche 35 illustre le seul chemin possible de la puissance pour la charge de la roue à inertie RI. La flèche 36 illustre le seul chemin possible de la puissance pour la décharge de la roue à inertie RI.

Lorsqu'une panne totale de la génération électrique intervient, le réseau électrique se trouve alors déconnecté de toute source électrique. La roue à inertie RI est instantanément couplée au réseau (fermeture du contacteur KM*_{FW}*) , permettant de maintenir un niveau de tension convenable, et de fournir la puissance et l'énergie nécessaires au bon fonctionnement de l'avion.

Après les quelques secondes nécessaires au déploiement et à la mise en rotation de la turbine éolienne RAT, la roue à inertie RI est découplée du réseau pour laisser place à cette turbine éolienne (ouverture de KM*_{FW}* et fermeture de KM*_{RAT}*) - Cette turbine éolienne se charge alors de maintenir les tensions du réseau et de fournir l'ensemble de la puissance et l'énergie nécessaire au bon fonctionnement de.l'avion.

Pendant la période transitoire, la roue à inertie RI s'est déchargée d'une quantité d'énergie conséquente. Il faut alors la recharger afin d'assurer sa disponibilité pour une future période transitoire. Cette remise en vitesse de la roue à inertie est réalisée, comme la première mise en vitesse décrite précédemment, en utilisant la partie « essentielle » 33 du réseau, via le dispositif auxiliaire 30.

Lors de l'atterrissage de l'avion, après le décrochage de la turbine éolienne RAT, celle-ci est découplée du réseau. La roue à inertie RI est à nouveau couplée au réseau afin de fournir la puissance nécessaire au freinage de l'avion (ouverture du contacteur KM*_{RAT}* et fermeture du contacteur KM*_{FW}*).

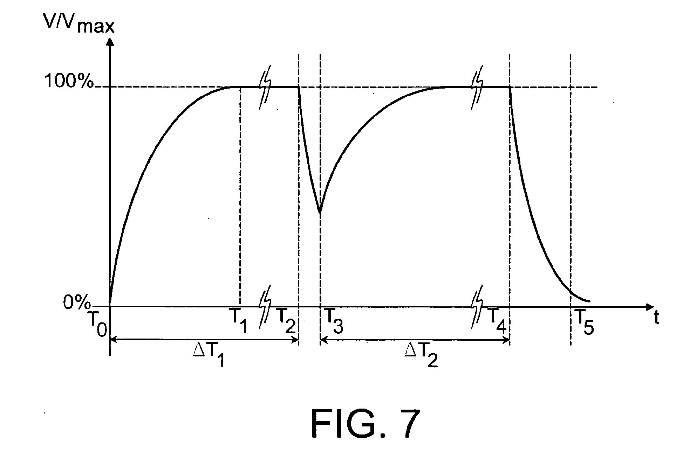

Le chronogramme de la figure 7 illustre le fonctionnement de la roue à inertie RI, tel que défini ci-dessus, en fonction du temps t, la vitesse V de rotation de la roue à inertie RI représentant son état de charge.

Sur cette figure sont illustrés les instants t suivants :
- T0 mise en route de l'avion,
- T1 : décollage,
- T2 : perte de la génération électrique (générateurs GEN1-GEN4),
- T3 : mise en service de la turbine éolienne RAT,
- T4 : atterrissage,
- ΔT1 : génération électrique par générateurs GEN1-GEN4,
- AT2 : génération électrique par turbine éolienne RAT.

A la vitesse nominale (V = Vmax), l'énergie disponible est maximale. Le chronogramme fait apparaître les deux périodes transitoires non couvertes par la turbine éolienne, qui sont situées entre les temps T2 et T3 et les temps T4 et T5. Il apparaît clairement que la charge initiale de la roue à inertie RI est réalisée à la mise en route de l'avion (temps T0), et est ensuite maintenue pendant le vol. Pendant la première période transitoire (période T2→T3), la roue à inertie RI se décharge. Elle est ensuite rechargée. A l'atterrissage, la turbine éolienne RAT devient inactive, ce qui met la roue à inertie à pleine contribution (période T4→T5).

En ce qui concerne les puissances mises en jeu, une puissance du dispositif auxiliaire 30 égale à environ 10 % de celle de la turbine éolienne RAT permet de charger la roue à inertie RI en un temps de l'ordre de la minute. Pour une turbine éolienne RAT possédant un générateur électrique de 50 kW par exemple, une puissance auxiliaire de 5 kW est convenable pour les phases de charge.

## Revendications

1. Dispositif d'alimentation de secours électrique à bord d'un aéronef, qui comprend une source de secours électrique apte à alimenter la partie « essentielle » du réseau électrique de cet aéronef en cas de perte totale des moteurs de cet aéronef, **caractérisé en ce qu'**il comprend des moyens de production d'énergie pendant les périodes transitoires d'inactivité de la source de secours électrique dans les instants qui suivent la perte totale des moteurs et lors de l'atterrissage de l'aéronef, et **en ce que** ces moyens de production d'énergie comprennent une roue à inertie réversible en puissance, qui est accouplée à une première machine synchrone à excitation séparée (MS1) permettant de réaliser le couplage de la roue à inertie directement sur le réseau alternatif triphasé de l'aéronef, et un dispositif auxiliaire (30) de mise en rotation de la roue d'inertie, qui permet de stocker de l'énergie cinétique dans celle-ci, et de maintien en rotation de celle-ci.

2. Dispositif selon la revendication 1, comprenant en outre une seconde machine synchrone à excitation séparée (MS2) associée à une turbine éolienne (RAT).

3. Dispositif selon la revendication 2, dans lequel la première machine synchrone (MS1) est reliée :
- au dispositif auxiliaire (30), qui est lui-même relié à une barre bus « essentielle » (33) au travers d'un premier contacteur triphasé (KM_{FWaux}),
- à cette barre bus (33) à travers un second contacteur triphasé (KM_{Fw}),
- à la seconde machine synchrone (MS2), à travers ce second contacteur triphasé (KM_{Fw}) et un troisième contacteur triphasé (KM_{RAT}).

4. Dispositif selon la revendication 3, dans lequel le dispositif auxiliaire (30) comprend deux convertisseurs statiques (31, 32).

5. Dispositif selon la revendication 4, dans lequel le premier convertisseur (31) est un redresseur triphasé permettant d'obtenir une tension continue (DC).

6. Dispositif selon la revendication 4, dans lequel le second convertisseur (32) est un onduleur triphasé, qui permet l'autopilotage de la première machine synchrone (MS1).

7. Dispositif selon l'une quelconque des revendications précédentes, dans lequel l'aéronef est un avion.

8. Dispositif selon la revendication 7, dans lequel l'avion est un avion « tout électrique ».

9. Procédé d'alimentation de secours électrique à bord d'un aéronef, dans lequel on alimente la partie « essentielle » du réseau électrique de cet aéronef en cas de perte totale des moteurs de cet aéronef à l'aide d'une source électrique, **caractérisé en ce qu'**il comprend une étape de production d'énergie pendant les périodes transitoires d'inactivité de la source de secours électrique dans les instants qui suivent la perte totale des moteurs et lors de l'atterrissage de l'aéronef en utilisant une roue à inertie réversible en puissance, qui est accouplée à une première machine synchrone à excitation séparée (MS1) permettant de réaliser le couplage de la roue à inertie directement sur le réseau alternatif triphasé de l'aéronef, et un dispositif auxiliaire de mise en rotation de la roue d'inertie, qui permet de stocker de l'énergie cinétique dans celle-ci, et de maintien en rotation de celle-ci.

10. Procédé selon la revendication 9, dans lequel on utilise une seconde machine à excitation séparée (MS2) associée à une turbine éolienne (RAT).

11. Procédé selon la revendication 10, dans lequel lorsqu'une panne totale de la génération électrique intervient, la roue à inertie (RI) est instantanément couplée à la partie essentielle (33) du réseau électrique, et dans lequel, après les quelques secondes nécessaires au déploiement et à la mise en rotation de la turbine éolienne (RAT), la roue à inertie (RI) est découplée du réseau.

12. Procédé selon la revendication 11, dans lequel on recharge la roue à inertie en utilisant la partie « essentielle » (33) du réseau électrique, via le dispositif auxiliaire (30).

13. Procédé selon la revendication 10, dans lequel, lors de l'atterrissage de l'aéronef, après le décrochage de la turbine éolienne (RAT), la roue à inertie (RI) est couplée au réseau afin de fournir la puissance nécessaire au freinage de l'avion.

14. Aéronef comportant un dispositif selon l'une quelconque des revendications 1 à 8.

## Claims

1. Device for emergency electricity supply on board an aircraft, which comprises an emergency electric power source able to supply the « essential » part of the electrical power circuit of this aircraft in case of total engine loss, **characterized in that** it comprises means for producing energy during any transitory period of inactivity of the emergency electric power source during the moments following total engine loss and on aircraft landing, and **in that** said means for producing energy comprise a reversible power flywheel, which is coupled to a first synchronous machine with separate excitation (MS1) making it possible to directly couple the flywheel to the airplane's three-phase AC network, and an auxiliary device (30) to set the flywheel in rotation, so that to store kinetic energy therein and to maintain its rotation.

2. Device according to claim 1, also comprising a second synchronous machine with separate excitation (MS2) associated with a ram air turbine (RAT).

3. Device according to claim 2, wherein the first synchronous machine (MS1) is connected:
- to the auxiliary device (30), which itself is connected to an « essential » bus bar(33) via a first, three-phase contactor (KM_{FWaux}),
- to this bus bar (33), via a second three-phase contactor (KM_{FW}),
- to the second synchronous machine (MS2), via this second three-phase contactor (KM_{FW}) and a third three-phase contactor (KM_{RAT}).

4. Device according to claim 3, wherein the auxiliary device (30) comprises two static converters (31, 32).

5. Device according to claim 4, wherein the first converter (31) is a three-phase rectifier used to obtain direct voltage (DC).

6. Device according to claim 4, wherein the second converter (32) is a three-phase inverter allowing self-piloting of the first synchronous machine (MS1).

7. Device according to any of the preceding claims, wherein the aircraft is an airplane.

8. Device according to claim 7, wherein the airplane is an « all-electric » airplane.

9. Method to provide an emergency electricity supply on board an aircraft, in which the "essential" part of the electric power circuit of this aircraft is supplied, in case of total engine loss, with an emergency power source, **characterized in that** it comprises a step for producing energy during any transitory period of inactivity of the emergency electric power source during the moments following total engine loss and on aircraft landing, in using a reversible power flywheel, which is coupled to a first synchronous machine with separate excitation (MS1) making it possible to directly couple the flywheel to the airplane's three-phase AC network, and an auxiliary device (30) to set the flywheel in rotation, so that to store kinetic energy therein and to maintain its rotation.

10. Method according to claim 9, wherein a second machine (MS2) with separate excitation is used, associated with a ram air turbine (RAT).

11. Method according to claim 10 wherein, in the event of total failure of electricity generation, the flywheel (RI) is instantly coupled to the essential part (33) of the electrical power circuit and wherein, after the few seconds needed for deployment and setting in rotation of the ram air turbine (RAT), the flywheel (RI) is uncoupled from the power circuit.

12. Method according to claim 11, wherein the flywheel is recharged using the « essential » part (33) of the electrical power circuit, via the auxiliary device (30).

13. Method according to claim 10 wherein, during landing of the aircraft, when the ram air turbine (RAT) becomes inactive, the flywheel (RI) is coupled to the circuit to supply the necessary power for braking of the airplane.

14. Aircraft comprising a device according to any of claims 1 to 8.

## Patentansprüche

1. Vorrichtung zur Notstromversorgung an Bord eines Luftfahrzeugs, umfassend eine Notstromquelle, die zur Versorgung des "essentiellen" Teils des Stromnetzes dieses Luftfahrzeugs im Falle eines vollständigen Ausfalls der Triebwerke dieses Luftfahrzeugs geeignet ist, **dadurch gekennzeichnet, dass** sie Mittel zur Energieerzeugung während Übergangsperioden der Inaktivität der Notstromquelle in den Momenten, die einem vollständigen Ausfall der Triebwerke folgen, und während der Landung des Luftfahrzeugs umfasst und dass diese Mittel zur Energieerzeugung ein Trägheitsrad reversibler Leistung, das an eine erste Synchronmaschine mit getrennter Erregung (MS1) gekoppelt ist, durch die eine direkte Koppelung des Trägheitsrads mit dem dreiphasigen Wechselstromnetz des Luftfahrzeugs erfolgen kann, und eine Hilfsvorrichtung (30) zum In-Drehung-Versetzen des Trägheitsrads, das eine Speicherung der Kinetischen Energie in diesem ermöglicht, und zum In-Drehung-Halten desselben umfassen.

2. Vorrichtung nach Anspruch 1, die ferner eine zweite Synchronmaschine mit getrennter Erregung (MS2), die mit einer Windturbine (RAT) verbunden ist, umfasst.

3. Vorrichtung nach Anspruch 2, wobei die erste Synchronmaschine (MS1) verbunden ist mit:
- einer Hilfsvorrichtung (30), die selbst über einen ersten dreiphasigen Kontakt (KM_{FWaux}) mit einem "essentiellen" Schienenbus (33) verbunden ist,
- diesem Schienenbus (33) über einen zweiten dreiphasigen Kontakt (KM_{FW}),
- der zweiten Synchronmaschine (MS2) über diesen zweiten dreiphasigen Kontakt (KM_{FW}) und einen dritten dreiphasigen Kontakt (KM_{RAT}).

4. Vorrichtung nach Anspruch 3, wobei die Vorrichtung (30) zwei statische Umrichter (31, 32) umfasst.

5. Vorrichtung nach Anspruch 4, wobei der erste Umrichter (31) ein dreiphasiger Gleichrichter ist, durch den eine Gleichspannung (DC) erhalten werden kann.

6. Vorrichtung nach Anspruch 4, wobei der zweite Umrichter (32) ein dreiphasiger Wechselrichter ist, der eine automatische Steuerung der ersten Synchronmaschine (MS1) ermöglicht.

7. Vorrichtung nach einem der vorhergehenden Ansprüche, wobei das Luftfahrzeug ein Flugzeug ist.

8. Vorrichtung nach Anspruch 7, wobei dass Flugzeug ein "vollständig elektrisches" Flugzeug ist.

9. Verfahren zur Notstromversorgung an Bord eines Luftfahrzeugs, wobei der "essentielle" Teil des Stromnetzes dieses Luftfahrzeugs im Falle eines vollständigen Ausfalls der Triebwerke dieses Luftfahrzeugs mit Hilfe einer Stromquelle versorgt wird, **dadurch gekennzeichnet, dass** das Verfahren einen Schritt der Energieerzeugung während der Übergangsperioden einer Inaktivität der Notstromquelle in den Momenten, die dem vollständigen Ausfall der Triebwerke folgen, und während der Landung des Luftfahrzeugs umfasst, wobei ein Trägheitsrad reversibler Leistung, das an eine erste Synchronmaschine mit getrennter Erregung (MS1) gekoppelt ist, durch die, eine direkte Koppelung des Trägheitsrads mit dem dreiphasigen Wechselstromnetz des Luftfahrzeugs erfolgen kann, und eine Hilfsvorrichtung zum In-Drehung-Versetzen des Trägheitsrads, das eine Speicherung der Kinetischen Energie in diesem ermöglicht, und zum In-Drehung-Halten desselben verwendet werden.

10. Verfahren nach Anspruch 9, wobei eine zweite Maschine mit getrennter Erregung (MS2), die mit einer Windturbine (RAT) verbunden ist, verwendet wird.

11. Verfahren nach Anspruch 10, wobei, wenn eine vollständige Störung der Stromerzeugung erfolgt, das Trägheitsrad (RI) unmittelbar an den essentiellen Teil (33) des Stromnetzes gekoppelt wird und wobei nach den einigen Sekunden, die für das Entfalten und das In-Drehung-Versetzen der Windturbine (RAT) notwendig sind, dass Trägheitsrad (RI) vom Netz abgekoppelt wird.

12. Verfahren nach Anspruch 11, wobei das Trägheitsrad unter Verwendung des "essentiellen Teils" (33) des Stromnetzes über die Hilfsvorrichtung (30) erneut geladen wird.

13. Verfahren nach Anspruch 10, wobei das Trägheitsrad (RI) während der Landung des Luftfahrzeugs, nach dem Aussetzen der Windturbine (RAT), an das Netz gekoppelt wird, um die zum Bremsen des Flugzeugs notwendige Leistung zu liefern.

14. Luftfahrzeug, das eine Vorrichtung nach einem der Ansprüche 1 bis 8 umfasst.
